# EUROPEAN PATENT SPECIFICATION

(11) **EP 3 749 885 B1**
(45) Date of publication and mention of the grant of the patent: **15.03.2023**
(21) Application number: 19705588.2
(22) Date of filing: 23.01.2019
(51) Int. Cl.: F16L 19/065, F16L 33/22

(54) **CONNECTION DEVICE FOR PIPES**
ANSCHLUSSVORRICHTUNG FÜR ROHRLEITUNGEN
DISPOSITIF DE RACCORDEMENT POUR TUYAUX

(30) Priority: 05.02.2018 IT 201800002412; 05.02.2018 IT 201800002416
(43) Date of publication of application: 16.12.2020
(73) Proprietor: Emmeti S.p.A., 33074 Fontanafredda (IT)
(72) Inventor: VISENTIN, Eros, 33080 PORCIA (IT)
(74) Representative: Petraz, Gilberto Luigi
(86) International application number: PCT/IT2019/050016
(87) International publication number: WO 2019/150405

(56) References cited:
- EP-A1- 1 388 701
- EP-A1- 2 366 930
- WO-A1-2005/061938
- IT-A1- UB20 155 015

## Description

### FIELD OF THE INVENTION

Embodiments of the present invention concern a connection device to connect two tubular elements to each other, in which a pressurized fluid flows during use.

The connection device allows to connect two tubular elements, for example each made of metal or non-metal material, guaranteeing both a high mechanical stability and also a high hydraulic seal.

In particular, the connection device is suitable to establish an effective and stable mechanical seal thereof to one of the two tubular elements and between the components of the connection device itself, so as to prevent the risk of unstable connections over time, or during the passage of the fluid under pressure.

### BACKGROUND OF THE INVENTION

Numerous connectors are known, for the sealed connection of two tubular elements, such as for example a fixed metal pipe of a hydraulic apparatus and a removable rubber pipe.

It is necessary that these connectors must guarantee a perfect seal even in the presence of fluids at high pressures and ensure a stability over time against the detachment of the connected parts.

Connectors also exist which normally comprise an external element, or nut, to which the second pipe is screwed, a first element, of the deformable elastic ring type, disposed coaxial inside the nut and possibly open along one side to grip the first pipe, and a second element disposed coaxial with the elastic ring, to guide the correct positioning of the first pipe.

The screwing of the second pipe on the nut causes an axial movement of the second element inside the first pipe, with consequent narrowing of the elastic ring so as to clamp the latter axially with the first pipe.

However, these known solutions have the disadvantage that no provision is made to link the position of the nut and of the two elements to each other.

In these conditions, the elastic ring acts exclusively as a passive gripping element to the first pipe and this does not guarantee a stable and efficient mechanical seal thereof with the second element and/or the nut, which can become detached even after being connected.

Other known solutions provide connectors in which the first pipe to be connected is inserted previously in a seating made between the elastic ring and the second element, and in which the nut is screwed to the second element, or to another additional coaxial element.

When the nut is screwed to the second pipe, the elastic ring is tightened by deformation against the end of the first pipe, and is clamped.

The connectors described heretofore require a plurality of additional components, or complex workings, to connect the nut and the two elements to each other, which however allow to achieve a poor, or partial, mechanical seal of the latter to the first pipe and to each other.

As well as making maintenance and/or replacement operations difficult, known solutions do not allow to achieve a stable connection between the components, making the connector unsuitable to guarantee over time the mechanical seal of its components to the pipes.

Document WO-A-2005/061938 describes a device for tightening pipes that comprises a base body with a mechanism to attach one end of the pipe to the base body and a clamping mechanism to secure the base body to a connection element for another device to which the pipe can be connected removably and with a hydraulic seal. In this known tightening device a collar is present, able to be connected to the base body and which has a shaped elastic central part and two opposite rigid ends, of which a first rigid ring-shaped part that has a clamping end to clamp it to the base body and a second rigid part that defines a pipe insertion guide along which a pipe can be inserted. A mobile clamping mechanism is provided along the pipe insertion guide, which has an end edge coupled with an end protruding from the second rigid part of the collar. The shaped elastic central part of the collar can be deformed toward the surface of the pipe when a radial pressure is applied on a cam portion thereof, cooperating with the mobile clamping mechanism.

There is therefore a need to perfect the state of the art and make available a connection device which overcomes at least one of the disadvantages of the state of the art.

One purpose of the present invention is to provide a connection device for pipes which allows to obtain a stable mechanical seal thereof to the pipes and between the components of the connection device.

It is also a purpose of the invention to provide a connection device for pipes that allows a user to quickly and easily install/uninstall the latter to the pipes, without using additional components, or complex operations.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, the present invention concerns a connection device to connect a first pipe to another pipe.

The connection device comprises at least a hollow external body for the stable and releasable connection of the first pipe and the other pipe, and a first internal element, also called adaptor element, configured to adapt the connection of the first pipe to the other pipe, and able to be assembled coaxially to the first pipe in the external body, and a second internal clamping element able to be fitted axially on the first pipe and to be assembled coaxially to the first internal element in the external body.

According to one aspect of the present invention, the second internal element is entirely elastic and is provided with at least a first anchoring portion and a second anchoring portion mating respectively with a first attachment portion of the first internal element and with a second attachment portion of the external body to define a connection assembly in which the external body, the first internal element and the second internal element are assembled together to define a single body.

According to possible embodiments, the connection assembly is pre-assembled and can be coupled directly to the first pipe and to the other pipe.

According to possible embodiments, the first attachment portion is provided with an attachment seating and the second attachment portion is provided with an attachment seating.

The first anchoring portion and the second anchoring portion are configured to cooperate, respectively, during use, with the first attachment seating and the second attachment seating to obstruct respectively the movement of the first internal element in a first axial direction and the movement of the external body in a second axial direction, opposite the first axial direction.

The axial directions are two directions parallel to the coupling axis of the connection device when it is coupled to the first pipe.

This solution allows to obtain a reliable and stable coupling of the first internal element and of the external body with the second internal element which, during use, entails that all three are constrained to the first pipe and ensure the tightening of the second internal element thereon.

The reciprocal coupling between the first internal element and the external body is ensured by the coupling of the anchoring portions of the second internal element.

This solution allows a user to install the connection device in a simple and easy way.

According to possible embodiments, the second internal element can have an internal surface, located during use in contact with the first pipe, and an external surface, opposite the internal surface, in which at least one of either the first anchoring portion or the second anchoring portion protrudes from the external surface.

This embodiment simplifies the coupling between the second internal element with the first internal element and the external body.

In accordance with possible embodiments, the first anchoring portion and the second anchoring portion are each provided with a reference wall.

According to possible embodiments, the first attachment portion and the second attachment portion are each provided with an attachment tooth having an abutment wall.

In this case, each of the abutment walls, during use, is located in contact with a respective reference wall.

According to possible embodiments, the angle of inclination defined between the reference wall and the abutment wall is an angle comprised between 0° and 15°.

According to possible embodiments, the second internal element is provided with at least one inclined segment adjacent to at least one of either the first anchoring portion or the second anchoring portion, wherein the inclined segment is configured to cooperate with an inclined wall adjacent to a respective attachment seating in order to limit the reciprocal movement of the components of the connection assembly.

This conformation allows to have a sufficient play between the first internal element and the second internal element and between the external body and the second internal element.

The play allows to maintain the connection during use and allows at the same time to easily remove when required the first internal element and the external body, for example, for maintenance.

According to the invention, the second internal element is defined by an elastic ring having an air gap inclined with respect to the longitudinal extension of the elastic ring itself which interrupts the continuity of the material, disposed, during use, outside the first pipe.

According to possible embodiments, the first anchoring portion is located at one end of the second internal element and the second anchoring portion is located at another end of the second internal element.

According to possible embodiments, the first anchoring portion and the second anchoring portion extend over at least part of two distinct transverse perimeters of the second internal element.

These and other aspects, characteristics and advantages of the present disclosure will be better understood with reference to the following description, drawings and attached claims. The drawings, which are integrated and form part of the present description, show some embodiments of the present invention, and together with the description, are intended to describe the principles of the disclosure.

### BRIEF DESCRIPTION OF THE DRAWINGS

These and other characteristics of the present invention will become apparent from the following description of some embodiments, given as a non-restrictive example with reference to the attached drawings wherein:
- figs. 1 and 2 are two sections of a connection device installed on a pipe according to a possible embodiment of the present invention, in which fig. 1 shows the pipe in a not correctly connected position and fig. 2 shows the pipe in a correctly connected position;
- figs. 1a and figure 1b show a detail of fig.1;
- fig. 3 is an exploded view of a connection device with a pipe according to a possible embodiment of the present invention;
- fig. 3a is a perspective view of a variant of part of the connection device in accordance with the embodiments described here;
- figs. 4-6 show a connection device in three steps of an assembly sequence.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways.

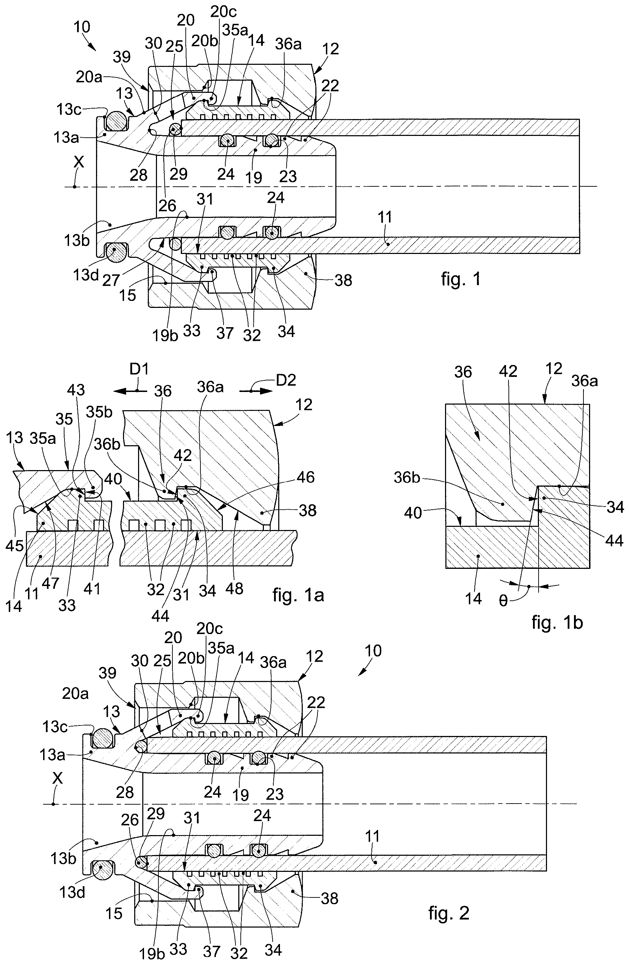

With reference to figs. 1-6, which show non-restrictive examples of the invention, we will now describe embodiments of a connection device 10 able to connect a first pipe 11 with a second pipe, not shown in the drawings.

For example, the first pipe 11 can be made of rubber, plastic, or other material, and the second pipe can comprise a threaded metal pipe such as, for example, the end portion of a tap.

According to possible embodiments, the connection device 10 comprises an external body 12, also known as a nut, hollow and configured for the stable and releasable connection of the pipes, and a first internal element 13, also called adapter element, configured to adapt the connection between the pipes, and a second internal clamping element 14, also called elastic ring, able to be fitted axially on the first pipe 11 and to be assembled coaxially to the first internal element in the external body 12. The second internal element 14 is entirely elastic, in particular with respect to radial stresses; in other words the second internal element 14 is entirely elastic radially.

The first internal element 13 is able to be assembled coaxially with the first pipe 11 in the external body 12.

The external body 12, the first internal element 13 and the second internal element 14, during use, are substantially coaxial to each other along a common coupling axis X.

According to possible embodiments, the external body 12 and the two internal elements 13 and 14 can be previously assembled in a single block and can be reciprocally mobile with a certain play, before the first pipe 11 and the second pipe are connected to the connection device 10.

According to possible embodiments, the external body 12 can be internally equipped with an annular cavity 15 in which the first internal element 13 and the second internal element 14 are at least partly positioned.

According to possible embodiments, the first internal element 13 is located, at least partly, between the external body 12 and the second internal element 14.

According to possible embodiments, not shown, the external body 12 can be provided with a thread to be able to connect the latter to the second pipe, or to the first internal element 13 in a prior assembly step of the connection device 10.

According to possible variants, the external body 12 can comprise an external portion 16 shaped like a hexagon, so as to be able to easily handle the latter with a standardized tool.

According to possible embodiments, the external body 12 can comprise two or more apertures 17 made on angularly distanced parts on its external surface 18.

According to possible embodiments, the apertures 17 can extend axially with respect to the external body 12, that is, in the direction of the coupling axis X between the first pipe 11 and the second pipe.

The apertures 17 can be used to engage an extractor tool with the external body 12 to easily disconnect the latter from the second pipe.

According to possible embodiments, the first internal element 13 can comprise a first portion 19 which extends longitudinally in its axial direction and a second flared or tapered portion 20 connected to the first portion 19, and surrounding at least part of the external surface 21 thereof.

The second portion 20 is in a single body, integral and solid with the first internal element 13 together with the first portion 19. Consequently, the second portion 20 is static with respect to the first portion 19 of the first internal element 13.

The first portion 19 is of an essentially tubular shape, defining an axial hole 19b for the passage of fluids and is substantially concentric with respect to the second portion 20, disposed inside it. The second portion 20 therefore forms a flared or tapered collar structure which surrounds the first tubular portion 19.

The first internal element 13 is therefore advantageously a monoblock body, in which the first portion 19 and the second portion 20 are in a single body with the first internal element 13, integral and solid parts of the latter.

The first internal element 13 also comprises an end base 13a, tubular in shape, defining an aperture 13b fluidically in communication with the axial hole 19b, for the passage of fluids. On the end base 13a there is a circumferential seating 13c to house a fluid seal element 13d, for example an annular gasket. The end base 13a also forms part of the monoblock structure of the first internal element 13 to which the first portion 19 and the second portion 20 belong. The first portion 19 and the second portion 20 substantially protrude from the end base 13a of the first internal element 13.

The flared shape of the second portion 20, in particular, is substantially a convergent-divergent shape with respect to the coupling axis X and is mainly formed by a flared or tapered layer which extends circumferentially around the first portion 19. In particular, the convergent-divergent flared shape of the second portion 20 is formed by a first inclined truncated-cone segment 20a which all in all defines the flared or tapered shape of the second portion 20 and which develops from the end base 13a of the first internal element 13, in particular from a more internal position, axially downstream of the circumferential seating 13c with respect to the aperture 13b, and by a second substantially cylindrical element 20b which extends from the first inclined truncated-cone segment 20a, and on which, at the end, an annular tooth 20c is provided, protruding toward the inside, which defines an anchoring seating 35, the function of which is explained in more detail below.

According to possible embodiments, during use, the first portion 19 of the first internal element 13 is located in the first pipe 11.

According to possible embodiments, ridges 22 can be made on the external surface of the first portion 19, able to cooperate by mechanical interference with the internal surface of the first pipe 11.

In the hollows 23 defined by at least some of the ridges 22, sealing rings 24 can be disposed, for example gaskets of the O-ring type.

According to possible embodiments, a compartment 25 is defined between the first portion 19 and the second portion 20.

According to possible embodiments, a reference ring 26 can be located in the compartment 25.

According to possible embodiments, in the compartment 25 at least one housing seating 28 can be defined for the reference ring 26.

According to possible embodiments, the housing seating 28 is located in the connection segment between the first portion 19 and the second portion 20.

According to possible embodiments, the reference ring 26 can be substantially configured as the sealing ring 24 in order to guarantee, during use, an efficient hydraulic seal between the first pipe 11 and the part that protrudes from the latter of the first portion 19.

The reference ring 26 can be made of an elastic material, such as rubber for example, so that it can be elastically deformed.

According to possible embodiments, at least part of the external surface of the reference ring 26 can be advantageously colored so that the latter can be easily identified.

For example, the reference ring 26 can be red, while the other sealing rings 24 can be black.

According to possible embodiments, the first portion 19 has an inclined segment 27 near the housing seating 28 has its maximum diameter, so as to cause a reduction in the diameter of the first portion 19 to move away from the housing seating 28.

According to possible embodiments, the reference ring 26 has a diameter slightly less than the maximum diameter of the inclined segment 27.

During insertion of the first portion 19 into the first pipe 11, the inclined segment 27 determines the progressive sliding of the reference ring 26, by virtue of the diameter of the latter which is less than the maximum diameter of the inclined segment 27, toward the edge 29 of the end of the first pipe 11.

The inclined segment 27 defines, during use, at least a first configuration in which the reference ring 26 is in contact with the edge 29 of the end of the first pipe 11 outside the housing seating 28, and a second configuration in which the ring reference 26 is in contact with the edge 29 of the end of the first pipe 11 in the housing seating 28.

When the reference ring 26 is positioned inside the housing seating 28 and is in contact with the edge 29 of the end of the first pipe 11, that is, when the second configuration is made, the first pipe 11 is correctly connected to the first internal element 13.

According to possible embodiments, the second portion 20 can comprise at least one inspection aperture 30 able to make visible at least part of the first portion 19 from the outside so as to allow to check, during use, the correct coupling position of the first pipe 11 to the first internal element 13, by visually observing the possible presence of the reference ring 26.

The inspection aperture 30 can be positioned and sized so as to observe exclusively the zone where there is the housing seating 28 so as to observe visually if the reference ring 26 is in the latter.

In particular, said at least one inspection aperture 30 can be made in the first inclined truncated-cone segment 20a of the second portion 20. The second segment 20b of the second portion 20 can be continuous and not have interruptions or apertures.

Advantageously, since the second portion 20 is in a single body together with the first portion 19 in the first internal element 13, the second portion 20 and the first portion 19 are static one with respect to the other and therefore the visual verification from the outside of the at least part of the first portion 19 through the at least one inspection aperture 30 is reliable and safe since there are no undesired and unpredictable relative movements between the first portion 19 and the second portion 20.

According to possible embodiments, the inspection aperture 30 can be positioned and sized so as to observe the zone of the compartment 25, where there is no housing seating 28, so as to visually observe when the reference ring 26 is not in the latter.

According to possible embodiments, the axial extension of the external body 12 astride the first internal element 13 is coordinated with the position of the inspection aperture 30 so as to leave free a passage gap 39, able to sight the latter, so as to enable visibility from the outside of at least a portion of the compartment 25.

According to possible embodiments, the passage gap 39 can be axially symmetrical, for example it can have a shape with a toroidal development.

The inspection aperture 30 can be positioned so as to be able to visually observe the first pipe 11, when the reference ring 26 is located in the housing seating 28, that is, the second configuration, and the reference ring 26 and/or part of the first portion 19, when the reference ring 26 is not located in the housing seating 28, that is, the first configuration.

If only the first pipe 11 is visible through the inspection aperture 30, then the connection of the latter to the first internal element 13 is correctly made.

According to possible embodiments, by positioning the inspection aperture 30 in correspondence with the housing seating 28 it is possible to verify the correct connection when the reference ring 26 is in the latter.

By using a reference ring 26 that is at least partly colored on its external surface, it is possible to easily identify it through the inspection aperture 30.

According to one aspect of the present invention, the second internal element 14 is provided with at least a first anchoring portion 33 and a second anchoring portion 34 respectively mating with a first attachment portion 35 of the first internal element 13 and to a second attachment portion 36 of the external body 12 to define a connection assembly 50 in which the external body 12, the first internal element 13 and the second internal element 14 are assembled together to define a single body.

According to possible embodiments, the connection assembly 50 can be supplied pre-assembled so as to be directly coupled with the first pipe 11.

The first attachment portion 35 can be provided with an attachment seating 35a and the second attachment portion 36 can be provided with an attachment seating 36a.

In this case, the first anchoring portion 33 and the second anchoring portion 34 are configured to cooperate, respectively, during use, with the first attachment seating 35a and the second attachment seating 36a to obstruct respectively the movement of the first internal element 13 in a first axial direction D1 and the movement of the external body 12 in a second axial direction D2, opposite the first axial direction D1.

The first and second axial directions D1 and D2 are defined parallel to the coupling axis X.

The cooperation between the anchoring portions 33 and 34 with the respective attachment seatings 35a and 36a provides to position the first in the latter.

According to possible embodiments, the second internal element 14 has an internal surface 31 located, during use, in contact with the first pipe 11 and an external surface 40 opposite the internal surface 31, in which at least one of either the first anchoring portion 33 or the second anchoring portion 34 protrudes from the external surface 40.

According to possible embodiments, the first anchoring portion 33 and the second anchoring portion 34 are each provided with a reference wall 41 and 42.

According to possible embodiments, the first attachment portion 35 and the second attachment portion 36 are each provided with an attachment tooth 35b and 36b having an abutment wall 43 and 44, in which each of the abutment walls 43 and 44, during use, is located in contact with a respective reference wall 41 and 42.

According to possible embodiments, the angle of inclination (θ) defined between the reference wall 41 or 42 and the abutment wall 43 or 44 is an angle comprised between 0° and 15°.

According to possible embodiments, the second internal element 14 is provided with at least one inclined segment 45 and 46 adjacent to at least one of either the first anchoring portion 33 or the second anchoring portion 34, wherein the inclined segment 45 and 46 is configured to cooperate with an inclined wall 47 and 48 adjacent to a respective attachment seating 35a and 36a to limit the reciprocal movement of the components of the connection assembly 50.

According to possible embodiments, the first internal element 13 is provided with a terminal portion 37, defined by said annular tooth 20c, located, during use, outside the first pipe 11 and having a curved shape that defines the first attachment seating 35a. The terminal portion 37 is, in fact, part of the first attachment portion 35.

In accordance with possible embodiments, the external body 12 is provided with an internal conical portion 38 in which the second attachment seating 36a is made.

Both the curved hook conformation of the terminal portion 37 and the internal portion 38 of the external body 12 individually allow to simplify the coupling between the anchoring portions 33 and 34 and the attachment seatings 35a and 36a, allowing the user to install the connection device 10 quickly.

According to possible embodiments, the second internal element 14 is disposed, during use, outside the first pipe 11, in fact fitted axially thereon.

In some embodiments, which can be combined with all the embodiments described here, the second internal element 14 can be made of metal.

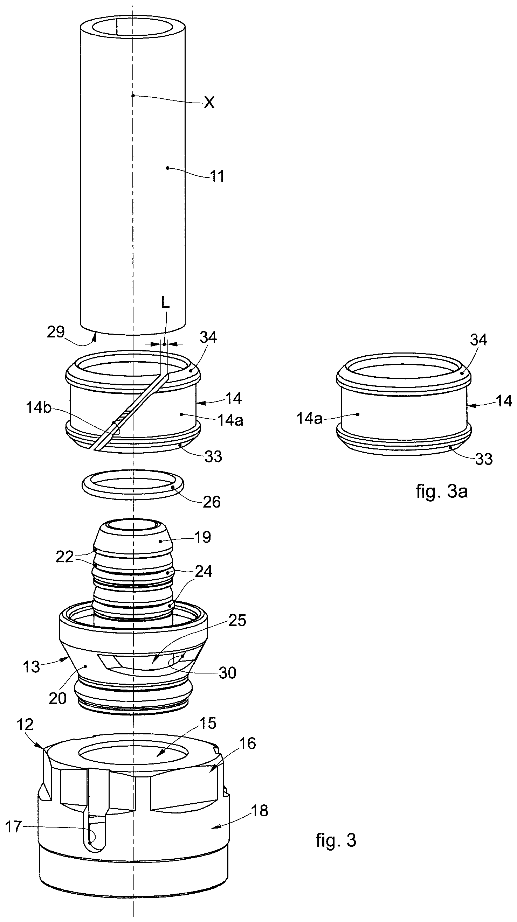

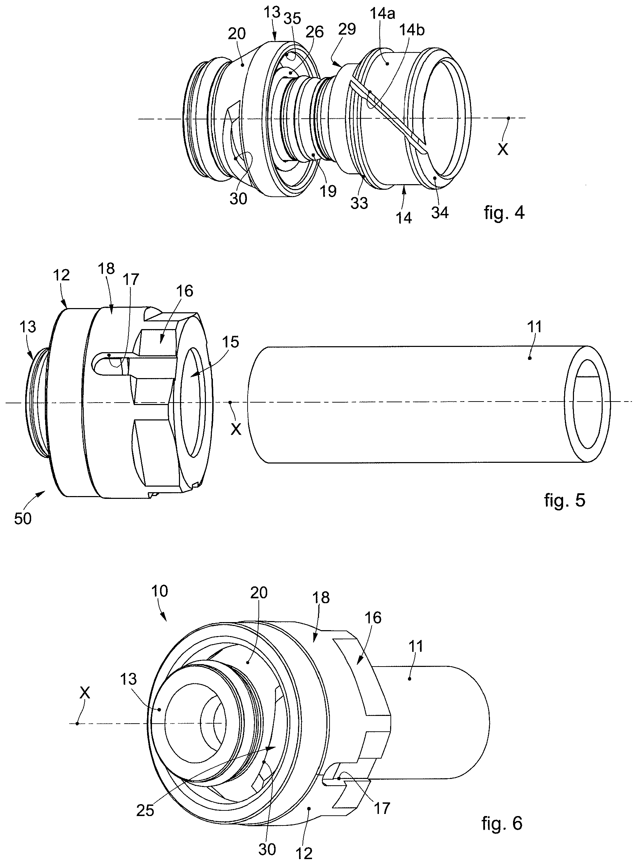

The second internal element 14 is entirely elastic, in particular it is defined by an elastic ring 14a. The elastic ring 14a can be formed by a cylindrical tubular element of suitable height, diameter and thickness. More particularly, the second internal element 14 is defined by an elastic ring 14a having a through notch 14b made completely through the thickness and height of the elastic ring 14a, in practice completely interrupting the continuity of the material (see figs.3 and 4). The through notch 14b is inclined, in particular for example from 25° to 40°, with respect to the longitudinal extension of the elastic ring itself, and therefore with respect to the coupling axis X, and, completely interrupting the continuity of the material, defines an air gap, thus making the second internal element 14 elastic in particular with respect to radial stresses. The presence of the through notch 14b modifies, in fact, the mechanical properties of the ring 14a making it completely elastic, particularly with respect to radial stresses.

In possible embodiments, the ratio between the width L of the through notch 14b and the internal diameter of the elastic ring 14a can be comprised between 0.3 and 0.5, in particular between 0.35 and 0.45.

In other embodiments, the second internal element 14 can be a solid ring 14a, that is, free of notches and interruptions of material, such as for example in fig. 3a; in this case the elasticity can be obtained by suitably selecting the material of which the ring 14a is made, as well as its geometry and/or thickness.

According to possible embodiments, the first anchoring portion 33 is located at one end of the second internal element 14 and the second anchoring portion 34 is located at another end of the second internal element 14.

According to possible embodiments, the first anchoring portion 33 and the second anchoring portion 34 extend over at least part of two distinct transverse perimeters of the second internal element 14.

According to possible embodiments, the second internal element 14 has at least one portion located between the external body 12 and the first pipe 11 and at least another portion located between the first internal element 13 and the first pipe 11.

According to possible embodiments, not shown, the second internal element 14 can be defined by an open ring, the ends of which are closed when the connection is made, in order to grip the first pipe 11.

The second internal element 14 also comprises an internal surface 31, which can be provided with a plurality of gripping teeth 32 which, during use, incise and axially retain the first pipe 11.

According to possible embodiments, the second portion 20 of the first internal element 13 has the curved terminal portion 37 which defines the first attachment seating 35a.

With reference to the sequence shown in figs. 4, 5 and 6, the connection between the first pipe 11 and the connection device 10 can be made according to the sequence described below.

The first internal element 13 is coupled with the second internal element 14 by associating the first anchoring portion 33 to the first attachment portion 35.

The assembly formed by the first and second internal elements 13 and 14 is inserted into the external body 12, associating the latter with the second internal element 14 by coupling the second anchoring portion 34 with the second coupling portion 36.

Advantageously, since the second internal element 14 is entirely elastic, and not only partly, it is possible to obtain the necessary overall elasticity to attach the external body 12 and respectively the first internal element 13 to the second internal element 14 and thus assemble a connection assembly 50.

In fact, a connection assembly 50 is obtained in which the external body 12, the first internal element 13 and the second internal element 14 are assembled together to define a single, and in fact monoblock body.

The connection assembly 50 can be coupled with a first pipe 11, by inserting the first portion 19 of the first internal element 13 into the first pipe 11 and in turn inserting the latter into the second internal element 14.

During this step, the reference ring 26 is located in contact with the edge 29 of the end of the first pipe 11.

The first pipe 11 is thrust, causing the latter to advance with respect to the first internal element 13, with consequent advance of the reference ring 26 until the latter is positioned in the housing seating 28.

During this operation, the operator can monitor from the outside the progressive and correct connection of the first internal element 13 to the first pipe 11, visually following the axial advance of the reference ring 26 through the inspection aperture 30.

Once the tightening of the connection device 10 and the final clamping of the two pipes have been completed, only the first pipe 11 will be visible from the inspection aperture 30.

In this way, if the user visually verifies that the reference ring 26 is visible, outside the housing seating 28, it means that the tightening of the connection device 10 is not complete and that the clamping of the pipes is not definitive, and the user is thus able to complete or correct this tightening.

Advantageously, the elasticity of the second internal element 14, useful in attaching and assembling the connection assembly 50, is converted into rigidity of the same second internal element 14 by the coupling to the first pipe 11 in which the first portion of the first internal element 13 is inserted. In fact, when the first pipe 11 is fitted on the first portion 19 of the first internal element 13, it is located between the first portion 19 and the second internal element 14, thus defining a lower abutment or shoulder for the second internal element 14, in particular for the first surface 31 of the second internal element 14, which, during use, is thus stiffened, constraining the external body 12 and the first internal element 13 to each other in a stable and reliable manner. Thus, the fact that the second internal element 14 is entirely elastic advantageously allows, on one hand, the attachment to assemble the connection assembly 50 and on the other hand allows the second internal element 14 to interact with the first pipe 11, when it is fitted onto the first portion 19, stiffening and stabilizing and making the coupling between the external body 12 and the first internal element 13 solid.

It is clear that modifications and/or additions of parts may be made to the connection device 10 as described heretofore, without departing from the field and scope of the present invention.

It is also clear that, although the present invention has been described with reference to some specific examples, a person of skill in the art shall certainly be able to achieve many other equivalent forms of connection devices 10, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Connection device to connect a first pipe (11) to another pipe, said device comprising:
- a hollow external body (12) configured for the stable and releasable connection of said first pipe (11) and said other pipe,
- a first internal adaptor element (13) configured to adapt the connection of said first pipe (11) to said other pipe, said first internal element (13) being able to be assembled coaxially to said first pipe (11) in said external body (12), and
- a second internal clamping element (14) able to be fitted axially on said first pipe (11) and to be assembled coaxially to said first internal element (13) in said external body (12), wherein said second internal element (14) is entirely elastic and is provided with at least a first anchoring portion (33) and a second anchoring portion (34) mating respectively with a first attachment portion (35) of said first internal element (13) and a second attachment portion (36) of said external body (12) to define a connection assembly (50) in which said external body (12), said first internal element (13) and said second internal element (14) are assembled with each other to define a single body, **characterised in that** said
second internal element (14) is defined by an elastic ring (14a) provided with a through notch (14b) made completely through the thickness and height of the elastic ring (14a), defining an air gap which completely interrupts the continuity of the material, said through notch (14b) being inclined, in particular from 25° to 40°, with respect to the longitudinal extension of the elastic ring (14a).

2. Device as in claim 1, **characterized in that** said connection assembly (50) is pre-assembled.

3. Device as in claim 1 or 2, **characterized in that** said first attachment portion (35) is provided with an attachment seating (35a) and said second attachment portion (36) is provided with an attachment seating (36a), **and in that** said first anchoring portion (33) and said second anchoring portion (34) are configured to cooperate respectively, during use, with said first attachment seating (35a) and said second attachment seating (36a), in order to obstruct respectively the movement of said first internal element (13) in a first axial direction (D1) and the movement of said external body (12) in a second axial direction (D2), opposite said first axial direction (D1).

4. Device as in any claim hereinbefore, **characterized in that** said second internal element (14) has an internal surface (31) located during use in contact with said first pipe (11), and an external surface (40), opposite said internal surface (31), wherein at least one of either said first anchoring portion (33) or said second anchoring portion (34) protrudes from said external surface (40).

5. Device as in any claim hereinbefore, **characterized in that** said first anchoring portion (33) and said second anchoring portion (34) are each provided with a reference wall (41, 42) and said first attachment portion (35) and said second attachment portion (36) are each provided with an attachment tooth (35b, 36b) having an abutment wall (43, 44), wherein each of said abutment walls (43, 44), during use, is located in contact with a respective reference wall (41, 42).

6. Device as in claim 5, **characterized in that** the angle of inclination (θ) defined between said reference wall (41, 42) and said abutment wall (43, 44) is an angle comprised between 0° and 15°.

7. Device as in any claim hereinbefore, **characterized in that** said second internal element (14) is provided with at least one inclined segment (45, 46) adjacent to at least one of either said first anchoring portion (33) or said second anchoring portion (34), wherein said inclined segment (45, 46) is configured to cooperate with an inclined wall (47, 48) adjacent to a respective attachment seating (35a, 36a) in order to limit the reciprocal movement of the components of said connection assembly (50).

8. Device as in any claim hereinbefore, **characterized in that** said second internal element (14) is disposed, during use, outside said first pipe (11).

9. Device as in claim 1, **characterized in that** the ratio between the width (L) of the through notch (14b) and the internal diameter of the elastic ring (14a) is comprised between 0.3 and 0.5, in particular between 0.35 and 0.45.

10. Device as in any claim hereinbefore, **characterized in that** said first anchoring portion (33) is located at one end of said second internal element (14) and said second anchoring portion (34) is located at another end of said second internal element (14).

11. Device as in any claim hereinbefore, **characterized in that** said first anchoring portion (33) and said second anchoring portion (34) extend on at least part of two distinct transverse perimeters of said second internal element (14).

## Patentansprüche

1. Anschlussvorrichtung zum Anschließen einer ersten Rohrleitung (11) an eine andere Rohrleitung, wobei die Vorrichtung umfasst:
- einen hohlen Außenkörper (12), der für den stabilen und lösbaren Anschluss der ersten Rohrleitung (11) an die andere Rohrleitung konfiguriert ist,
- ein erstes inneres Adapterelement (13), das so konfiguriert ist, dass es den Anschluss der ersten Rohrleitung (11) an die andere Rohrleitung anpasst, wobei das erste innere Element (13) koaxial mit der ersten Rohrleitung (11) in dem Außenkörper (12) zusammengesetzt werden kann, und
- ein zweites inneres Klemmelement (14), das axial auf die erste Rohrleitung (11) aufgesetzt und koaxial mit dem ersten inneren Element (13) in dem Außenkörper (12) zusammengesetzt werden kann, wobei das zweite innere Element (14) vollständig elastisch und mit mindestens einem ersten Verankerungsabschnitt (33) und einem zweiten Verankerungsabschnitt (34) versehen ist, die jeweils mit einem ersten Befestigungsabschnitt (35) des ersten inneren Elements (13) und einem zweiten Befestigungsabschnitt (36) des Außenkörpers (12) zusammenpassen, um eine Anschlussanordnung (50) zu definieren, in der der Außenkörper (12), das erste innere Element (13) und das zweite innere Element (14) so zusammengefügt sind, dass sie einen einzigen Körper definieren,
**dadurch gekennzeichnet, dass** das zweite innere Element (14) durch einen elastischen Ring (14a) definiert wird, der mit einer durchgehenden Aussparung (14b) versehen ist, die vollständig durch die Dicke und Höhe des elastischen Rings (14a) durchgehend ausgebildet ist, wodurch ein Luftspalt definiert wird, der vollständig die Kontinuität des Materials unterbricht, wobei die durchgehende Aussparung (14b) in Bezug auf die Längsausdehnung des elastischen Rings (14a) insbesondere um 25° bis 40° geneigt ist.

2. Vorrichtung gemäß Anspruch 1, **dadurch gekennzeichnet, dass** die Anschlussanordnung (50) vormontiert ist.

3. Vorrichtung gemäß Anspruch 1 oder 2, **dadurch gekennzeichnet, dass** der erste Befestigungsabschnitt (35) mit einem Befestigungssitz (35a) versehen ist, und der zweite Befestigungsabschnitt (36) mit einem Befestigungssitz (36a) versehen ist, und dass der erste Verankerungsabschnitt (33) und der zweite Verankerungsabschnitt (34) so konfiguriert sind, dass sie während des Gebrauchs jeweils mit dem ersten Befestigungssitz (35a) und dem zweiten Befestigungssitz (36a) zusammenwirken, um jeweils die Bewegung des ersten inneren Elements (13) in eine erste axiale Richtung (D1) und die Bewegung des Außenkörpers (12) in eine zweite axiale Richtung (D2), die der ersten axialen Richtung (D1) entgegengesetzt ist, zu verhindern.

4. Vorrichtung gemäß irgendeinem vorhergehenden Anspruch, **dadurch gekennzeichnet, dass** das zweite innere Element (14) eine Innenfläche (31), die während des Gebrauchs in Kontakt mit der ersten Rohrleitung (11) vorliegt, und eine der Innenfläche (31) entgegengesetzte Außenfläche (40) aufweist, wobei wenigstens einer von dem ersten Verankerungsabschnitt (33) oder dem zweiten Verankerungsabschnitt (34) von der Außenfläche (40) vorsteht.

5. Vorrichtung gemäß irgendeinem vorhergehenden Anspruch, **dadurch gekennzeichnet, dass** der erste Verankerungsabschnitt (33) und der zweite Verankerungsabschnitt (34) jeweils mit einer Bezugswand (41, 42) versehen sind, und der erste Befestigungsabschnitt (35) und der zweite Befestigungsabschnitt (36) jeweils mit einem Befestigungszahn (35b, 36b) versehen sind, der eine Anschlagwand (43, 44) aufweist, wobei jede der Anschlagwände (43, 44) während des Gebrauchs in Kontakt mit einer jeweiligen Bezugswand (41, 42) vorliegt.

6. Vorrichtung gemäß Anspruch 5, **dadurch gekennzeichnet, dass** der zwischen der Bezugswand (41, 42) und der Anschlagwand (43, 44) definierte Neigungswinkel (θ) ein Winkel von 0° bis 15° ist.

7. Vorrichtung gemäß irgendeinem vorhergehenden Anspruch, **dadurch gekennzeichnet, dass** das zweite innere Element (14) mit wenigstens einem geneigten Segment (45, 46) angrenzend an mindestens einen von dem ersten Verankerungsabschnitt (33) oder dem zweiten Verankerungsabschnitt (34) versehen ist, wobei das geneigte Segment (45, 46) so konfiguriert ist, dass es mit einer geneigten Wand (47, 48) angrenzend an einen jeweiligen Befestigungssitz (35a, 36a) zusammenwirkt, um die Hin- und Herbewegung der Komponenten der Anschlussanordnung (50) zu begrenzen.

8. Vorrichtung gemäß irgendeinem vorhergehenden Anspruch, **dadurch gekennzeichnet, dass** das zweite innere Element (14) während des Gebrauchs außerhalb der ersten Rohrleitung (11) angeordnet ist.

9. Vorrichtung gemäß Anspruch 1, **dadurch gekennzeichnet, dass** das Verhältnis zwischen der Breite (L) der durchgehenden Aussparung (14b) und dem Innendurchmesser des elastischen Rings (14a) von 0,3 bis 0,5, insbesondere von 0,35 bis 0,45, beträgt.

10. Vorrichtung gemäß irgendeinem vorhergehenden Anspruch, **dadurch gekennzeichnet, dass** der erste Verankerungsabschnitt (33) an einem Ende des zweiten inneren Elements (14) gelegen ist, und der zweite Verankerungsabschnitt (34) an einem anderen Ende des zweiten inneren Elements (14) gelegen ist.

11. Vorrichtung gemäß irgendeinem vorhergehenden Anspruch, **dadurch gekennzeichnet, dass** der erste Verankerungsabschnitt (33) und der zweite Verankerungsabschnitt (34) sich zumindest auf einem Teil zweier unterschiedlicher querverlaufender Umkreise des zweiten inneren Elements (14) erstrecken.

## Revendications

1. Dispositif de raccordement permettant de raccorder un premier tuyau (11) à un autre tuyau, ledit dispositif comprenant :
- un corps externe creux (12) configuré pour le raccordement stable et libérable dudit premier tuyau (11) et dudit autre tuyau,
- un premier élément adaptateur interne (13) configuré pour adapter le raccordement dudit premier tuyau (11) audit autre tuyau, ledit premier élément interne (13) pouvant être assemblé coaxialement audit premier tuyau (11) dans ledit corps externe (12), et
- un second élément de serrage interne (14) capable d'être ajusté axialement sur ledit premier tuyau (11) et d'être assemblé coaxialement audit premier élément interne (13) dans ledit corps externe (12), dans lequel ledit second élément interne (14) est entièrement élastique et est pourvu d'au moins une première partie d'ancrage (33) et d'une seconde partie d'ancrage (34) s'appariant respectivement avec une première partie de fixation (35) dudit premier élément interne (13) et une seconde partie de fixation (36) dudit corps externe (12) pour définir un ensemble de raccordement (50) dans lequel ledit corps externe (12), ledit premier élément interne (13) et ledit second élément interne (14) sont assemblés les uns aux autres pour définir un seul corps, **caractérisé en ce que** ledit second élément interne (14) est défini par un anneau élastique (14a) pourvu d'une encoche traversante (14b) réalisée complètement à travers l'épaisseur et la hauteur de l'anneau élastique (14a), en définissant un espace d'air qui interrompt complètement la continuité du matériau, ladite encoche traversante (14b) étant inclinée, en particulier de 25° à 40°, par rapport à l'extension longitudinale de l'anneau élastique (14a).

2. Dispositif selon la revendication 1, **caractérisé en ce que** ledit ensemble de raccordement (50) est pré-assemblé.

3. Dispositif selon la revendication 1 ou 2, **caractérisé en ce que** ladite première partie de fixation (35) est pourvue d'un siège de fixation (35a) et ladite seconde partie de fixation (36) est pourvue d'un siège de fixation (36a), et en ce ladite première partie d'ancrage (33) et ladite seconde partie d'ancrage (34) sont configurées pour coopérer respectivement, en utilisation, avec ledit premier siège de fixation (35a) et ledit second siège de fixation (36a), afin de faire obstruction respectivement au déplacement dudit premier élément interne (13) dans une première direction axiale (D1) et au déplacement dudit corps externe (12) dans une seconde direction axiale (D2), opposée à ladite première direction axiale (D1).

4. Dispositif selon l'une quelconque des revendications précédentes, **caractérisé en ce que** ledit second élément interne (14) présente une surface interne (31) située en utilisation en contact avec ledit premier tuyau (11), et une surface externe (40), opposée à ladite surface interne (31), dans lequel au moins l'une de ladite première partie d'ancrage (33) ou de ladite seconde partie d'ancrage (34) fait saillie à partir de ladite surface externe (40).

5. Dispositif selon l'une quelconque des revendications précédentes, **caractérisé en ce que** ladite première partie d'ancrage (33) et ladite seconde partie d'ancrage (34) sont pourvues chacune d'une paroi de référence (41, 42) et ladite première partie de fixation (35) et ladite seconde partie de fixation (36) sont pourvues chacune d'une dent de fixation (35b, 36b) présentant une paroi de butée (43, 44), dans lequel chacune desdites parois de butée (43, 44), en utilisation, est située en contact avec une paroi de référence respective (41, 42).

6. Dispositif selon la revendication 5, **caractérisé en ce que** l'angle d'inclinaison (θ) défini entre ladite paroi de référence (41, 42) et ladite paroi de butée (43, 44) est un angle compris entre 0° et 15°.

7. Dispositif selon l'une quelconque des revendications précédentes, **caractérisé en ce que** ledit second élément interne (14) est pourvu d'au moins un segment incliné (45, 46) adjacent à au moins l'une de ladite première partie d'ancrage (33) ou de ladite seconde partie d'ancrage (34), dans lequel ledit segment incliné (45, 46) est configuré pour coopérer avec une paroi inclinée (47, 48) adjacente à un siège de fixation respectif (35a, 36a) afin de limiter le déplacement en va-et-vient des composants dudit ensemble de raccordement (50).

8. Dispositif selon l'une quelconque des revendications précédentes, **caractérisé en ce que** ledit second élément interne (14) est disposé, en utilisation, à l'extérieur dudit premier tuyau (11).

9. Dispositif selon la revendication 1, **caractérisé en ce que** le rapport entre la largeur (L) de l'encoche traversante (14b) et le diamètre interne de l'anneau élastique (14a) est compris entre 0,3 et 0,5, en particulier entre 0,35 et 0,45.

10. Dispositif selon l'une quelconque des revendications précédentes, **caractérisé en ce que** ladite première partie d'ancrage (33) est située à une certaine extrémité dudit second élément interne (14) et ladite seconde partie d'ancrage (34) est située à une autre extrémité dudit second élément interne (14).

11. Dispositif selon l'une quelconque des revendications précédentes, **caractérisé en ce que** ladite première partie d'ancrage (33) et ladite seconde partie d'ancrage (34) s'étendent sur au moins une partie de deux périmètres transversaux distincts dudit second élément interne (14).
